# EUROPÄISCHE PATENTANMELDUNG

(11) **EP 4 364 876 A2**
(43) Veröffentlichungstag der Anmeldung: **08.05.2024**
(21) Anmeldenummer: 24159445.6
(22) Anmeldetag: 10.06.2022
(51) Int. Cl.: B23B 51/10

(54) **ENTGRATWERKZEUG MIT MESSERWECHSEL FÜR DIE VORWÄRTS- UND RÜCKWÄRTSENTGRATUNG VON BOHRUNGSRÄNDERN**

(62) Teilanmeldung aus: 22178312.9
(71) Anmelder: HEULE Werkzeug AG, 9436 Balgach (CH)
(72) Erfinder: FÄSSLER, Roman, 9437 Marbach (CH)
(74) Vertreter: Riebling, Peter

(57) **Zusammenfassung**

Entgratwerkzeug zum Entgraten von Bohrungen mit paarweiser Anordnung von Schneidmessern (2, 2a) und einem drehend angetriebenen Werkzeughalter (1), wobei in einer Messerausnehmung (20) eines Messergehäuses (3) die Schneidmesser (2, 2a) gegenüberliegend mit radial nach außen weisenden, konischen Schneidkanten(27, 28) durch eine in einem Grundkörper (6) des Werkzeughalters (1) angeordnete drehbare Wippe (4) radial gegeneinander verschiebbar angetrieben sind, und die Wippe (4) um eine axiale Längsachse drehbar im Werkzeughalter (1) gelagert und in axialer Richtung federnd vorgespannt ist, wobei zum Messerwechsel der Schneidmesser (2, 2a) das Messergehäuse (3) axial verschiebbar und festlegbar auf der Wippe (4) und dem Grundkörper (6) gelagert ist.

## Beschreibung

Die Erfindung betrifft ein Entgratwerkzeug für die Vorwärts- und Rückwärtsentgratung von Bohrungsrändern.

Bei der nachfolgend beschriebenen neuen Ausführung eines Werkzeughalters zum Entgraten bzw. Fasen von Bohrungskanten mit paarweiser Anordnung von Schneidmessern handelt es sich um eine Weiterentwicklung von Entgratwerkzeugen, wie sie in DE 26 49 208 A1 [mit der Referenznummer 1] und DE 10 2008 046 087 A1 [mit der Referenznummer 2] beschrieben sind. Die in diesen beiden Druckschriften enthaltene Beschreibung des Entgratwerkzeugs ist Teil der vorliegenden Erfindungsbeschreibung.

Die DE 26 49 208 C [1] zeigt dabei einen Werkzeughalter zum beidseitigen Entgraten der Kanten von Durchgangsbohrungen mit einem über einen Schaft drehantreibbaren Werkzeugkopf, der zwei im Wesentlichen radial nach außen weisende, in Aufnahmeschlitzen geführte und mit Federkraft nach außen gedrückte Schneidmesser aufweist, wobei die Federkraft mittels eines um die Längsachse des Werkzeughalters drehbar angeordneten Wippe auf die Schneidkörper übertragbar ist. Die Feder ist als Torsionsfeder ausgebildet, die einerseits am Werkzeuggehäuse befestigt ist und andererseits an der in einer Bohrung drehbaren Wippe angreift, die mit zapfenförmigen Fortsätzen in schlitzförmige Ausnehmungen der Schneidmesser eingreift.

Ferner zeigt diese Druckschrift, dass die Drehbewegung der Wippe durch eine von außen betätigbare Einstellschraube begrenzt ist, die mit ihrer Spitze an einer Anlagefläche der Wippe anliegt. Dabei sind die die zapfenförmigen Fortsätze der Wippe durch eine mit einem exzentrischen Ansatz in eine Ausnehmung der Wippe eingreifenden Schraube außer Eingriff mit den Schneidmessern zu bringen.

Die DE 10 2008 046 087 A1 [2] zeigt ein ähnliches Entgratwerkzeug zum Entgraten von Bohrungen mit paarweiser Anordnung von Schneidmessern und einem drehend angetriebenen Werkzeughalter, wobei in einem rechteckförmigen Aufnahmeschlitz (Messerausnehmung) die Schneidmesser gegenüberliegend mit radial nach außen weisenden, konischen Schneidkanten durch eine im Inneren des Werkzeughalters angeordnete drehbare Wippe mittels stirnseitig an der Drehwippe angeordneten Wippenbolzen radial gegeneinander verschiebbar angetrieben sind.

Die Wippe ist um eine axiale Längsachse drehbar im Werkzeughalter gelagert und in axialer Richtung federnd vorgespannt, wobei jeweils ein Wippenbolzen der Wippe in jeweils eine Nut des Schneidmessers eingreift. Dabei ist die Wippe entgegen einer Kraft einer Torsionfeder heb- und senkbar im Messergehäuse des Entgratwerkzeugs angeordnet ist und die Federvorspannung der Torsionsfeder ist in Torsionsrichtung gesteuert einstellbar.

Weiterführend sind noch folgende, weitere Druckschriften bekannt:
Die EP 0291563 B1, beschreibt die Ausführung von Schneidmessern, wie sie in der vorliegenden Erfindung verwendet werden. Die DE 2 407 269 A1 beschreibt eine andere Art der Führung und Rückstellung von Schneidkörpern bei einem gattungsgemäßen Entgratwerkzeug.

Abgrenzung zu den beiden Druckschriften DE 2649208 A1 [1] und DE 102008046087 A1 [2] zur vorliegenden Erfindung:
Das Grundprinzip der erfindungsgemäss beschriebenen Entgratwerkzeuge bleibt bestehen, in einem drehend angetriebenen Werkzeughalter zwei paarweise angeordnete und gegeneinander gerichtete Schneidmesser vorzusehen, welche in ihrer radialen Verschiebung aus der Messerausnehmung des Werkzeughalters hinaus oder in die Messerausnehmung hinein von einer Wippe betätigt sind. Die Wippe ist dabei als Zylinderstift ausgebildet und ist um die axiale Längsachse der Werkzeughalters drehend gelagert und mittels einer Torsionsfeder drehend vorgespannt. Aufgrund der speziellen Form der Schneidmesser erfolgt eine Entgratung von Bohrungsrändern sowohl bei der Vorwärtsbewegung des Entgratwerkzeugs in eine Bohrung hinein als auch bei einer Rückwärtsbewegung des Entgratwerkzeugs aus der Bohrung heraus, bei welcher der gegenüberliegende Bohrungsrand der gleichen Bohrung entgratet wird.

Die technische Lehre der Patentansprüche ist jedoch nicht auf die beidseitige Entgratung von Bohrungsrändern einer Durchgangsbohrung beschränkt. Es kann auch nur eine einseitige Entgratung nur eines einzigen Bohrungsrandes vorgesehen sein, ohne den Bohrungsrand an der rückwärtigen Seite der Durchgangsbohrung zu entgraten. Ebenso kann es vorgesehen sein, nur den Bohrungsrand einer Sackbohrung zu entgraten.

Die Erfindung geht von den beiden oben genannten Druckschriften [1] und [2] aus.

Nach dem Gegenstand der DE 10 2008 046 087 A1 [Referenznummer = 2] wird die Wippe (22 [2]) für den Messerwechsel mittels eines Exzenterstücks (25 [2]) zurückgezogen. Dies birgt folgende Nachteile:
a) Wird das Exzenterstück nach der Messermontage nicht ordnungsgemäss zurückgestellt greift die Wippe nicht in die Schneidmesser ein und diese können im Zerspanungprozess verloren gehen.
b) Die Wippe wird axial gegen die Torsionsfeder (12 [2]) nach hinten bewegt. Infolge der Reibkräfte, vor allem durch im Zerspanungsprozess verursachte Verschmutzung erzeugt, vermag die prioritär für Torsion ausgelegte Feder die Wippe nicht mehr zuverlässig zurückzustellen und diese greift nicht mehr in die Schneidmesser ein. In diesem Fall können die Schneidmesser ebenfalls im Zerspanungsprozess verloren gehen.
c) Die Wippenfreistellung mittels des Exzenterstücks (25 [2]) und den zugeordneten Komponenten an der Wippe ist aufwändig und kostentreibend.

Der Erfindung liegt deshalb ausgehend von der DE 10 2008 046 087 A1 die allgemeine Aufgabe zugrunde, ein Entgratwerkzeug so weiterzubilden, dass dessen Anwendung einfacher und betriebssicherer ist. Die Bedienung des Werkzeuges und die Einstellung der Entgratungsparameter sollen dabei einfacher, betriebssicherer und genauer erfolgen.

Die Erfindung hat deshalb nach einem ersten Aspekt der Erfindung die Aufgabe einen betriebssicheren Messerwechsel in einem Entgratwerkzeug vorzusehen.

Die Lösung der gestellten Aufgabe erfolgt mir der Lehre des unabhängigen Patentanspruchs 1. Vorteilhafte Weiterbildungen sind Gegenstand der weiteren unabhängigen Nebenansprüche und/oder der Unteransprüche.

In einer bevorzugten Ausführung ist es deshalb vorgesehen, dass der Messerwechsel durch axiales Verschieben des Messergehäuses relativ zur Wippe beziehungsweise zum Grundkörper erfolgt. Dies wird vorteilhaft durch Lösen der schon bestehenden Feststellschrauben erreicht. Beim Stand der Technik war die Wippe axial verschiebbar im Grundkörper gehalten, um einen Austausch der Schneidmesser zu ermöglichen. Nach der Erfindung wird jedoch das Messergehäuse axial verschiebbar und feststellbar auf der axial unverschiebbaren Wippe geführt, was zu überlegenen Eigenschaften beim Messerwechsel führt.

Es bedarf daher - wie beim Stand der Technik notwendig - keines Exzenterstücks und die dem Exzenterstück zugeordneten Komponenten mehr. Der Messerwechsel wird durch die axiale Verschiebung des die Wippe aufnehmenden Messergehäuses besonders einfach und betriebssicher.

Nach einem zweiten Aspekt der Erfindung besteht im Stand der Technik ein Problem bei der Einstellung der Fasgrösse des entgrateten Bohrungsrandes durch gesteuerte Dreheinstellung der Wippe.

Die DE 2649208 A1 [1] zeigt eine dort als Zwischenkörper (14 [1]) bezeichnete Wippe, die in ihrer radialen Position durch eine Einstellschraube (17 [1]) in ihrer Drehlage einstellbar positioniert ist und die radiale Lage der Schneidmesser (24 [1]) und somit die Fasgrösse des Bohrungsrandes definiert. Dies bedingt folgende Nachteile:
a) Die Einstellschraube kann sich während dem Zerspanungsprozess durch Vibrationen verstellen und das Fasergebnis verändern beziehungsweise beeinträchtigen.
b) Die radiale Lage der Wippe kann nicht reproduzierbar eingestellt werden, weil eine Markierung, welche die Lage der Wippe anzeigt, fehlt.
c) Das Einstellen der radialen Wippenposition mittels dieser Einstellschraube und den entsprechenden Komponenten an der Wippe ist aufwändig und kostentreibend.

Die Erfindung hat nach diesem zweiten Aspekt die Aufgabe durch die Konzeption eines neuen Verstellmechanismus die radiale Lage des Messergehäuses zur Wippe reproduzierbar durch Verdrehen zu verstellen und wieder festzusetzen, um die Fasgrösse einzustellen und prozesssicher zu halten.

Die DE 10 2008 046 087 A1 [2] zeigte, dass das Messergehäuse (2 [2]) mit dem Grundkörper (1 [2]) stets radial in derselben Position verankert ist und die Fasgrösse durch Verdrehen der Wippe zum Grundkörper eingestellt wird.

Nach einer bevorzugten Ausführung der Erfindung ist hingegen vorgesehen, dass die Wippe in radialer Richtung relativ zum Grundkörper in derselben Anschlagposition verbleibt und die Fasgrösse durch Verdrehen des Messergehäuses relativ zur Wippe und zum Grundkörper erfolgt.

Damit wird auch eine Kombination des ersten Aspekts der Erfindung mit dem zweiten Aspekt bevorzugt gezeigt, obwohl beide Aspekte der Erfindung auch Gegenstand unabhängiger Patentansprüche sind.

Die Kombination der beiden Aspekte besteht darin, dass das Messergehäuse sowohl axial verschiebbar und feststellbar auf der Wippe und dem die Wippe aufnehmenden Grundkörper und Justierstück gelagert ist und darüber hinaus auch noch radial drehbar einstellbar und feststellbar auf der Wippe und dem Grundkörper angeordnet ist. Mit dieser besonderen Verschiebungs- und Drehlageneinstellung des Messergehäuses relativ zur Wippe und dem Grundkörper können die beiden ersten Aspekte der Erfindung in Kombination verwirklicht werden. Jeder Aspekt der Erfindung hat jedoch auch Schutz in Alleinstellung.

Nach einem dritten Aspekt der Erfindung zeigte die DE 10 2008 046 087 A1 [2], dass die radiale Vorspannung der Wippe mit der Torsionsfeder für die Rückstellkraft der Schneidmesser durch die Elemente Spannkopf (5 [2]) und Indexbolzen (6[2]) eingestellt werden können. Daraus ergeben sich jedoch folgende Nachteile:
a) Die Vorspannkraft auf die Wippe und damit der Verschiebungsdruck auf die Schneidmesser kann nur stufenweise (indexiert), also nicht stufenlos eingestellt werden.
b) Der Stand der Technik lässt keine Adaption eines Werkzeugschafts zu, um den Werkzeughalter mit einem anderen Durchmesser als dem des Grundkörpers (1 [2]) in der Werkzugmaschine zu spannen. Dies weil die nach dem Stand der Technik gewählte Befestigung des Spannkopfs (5[2]) weder den notwendigen Rundlauf (Genauigkeit) noch die notwendige Starrheit für die Verwendung eines solchen Schaftes ermöglicht.

Die Erfindung hat sich deshalb nach einem dritten Aspekt die Aufgabe gestellt, durch die Konzeption einer neuen Adaption sowohl die Verwendung eines Schaftes als auch die stufenlose, reproduzierbare und prozesssichere Vorspannung der Wippe zu erlangen.

Zur Lösung der gestellten Aufgabe wird in einem unabhängigen Patentanspruch vorgeschlagen, dass der Schaft mittels zwei diametral gegenüberliegender Feststellschrauben, die in eine schaftseitige Ringnut eingreifen, kraftschlüssig festgesetzt wird. Mittels Lösens dieser Feststellschrauben kann die Torsionsfeder durch radiales Verdrehen des Schafts stufenlos vorgespannt werden. Durch anschliessendes Festsetzen des Schafts wird die eingestellte Vorspannung prozesssicher erhalten. Die Reproduzierbarkeit der Position wird durch entsprechende Markierungen am Schaft und am Grundkörper sichergestellt.

Alle drei Aspekte der Erfindung führen jeweils in jeder beliebigen Kombination untereinander und/oder in Alleinstellung zu einem neuen Konzept eines Entgratwerkzeugs, das nachfolgend anhand der Zeichnungen beschrieben wird.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, könnten als erfindungswesentlich beansprucht werden, soweit sie einzeln oder in Kombination gegenüber dem Stand der Technik neu sind. Die Verwendung der Begriffe "wesentlich" oder "erfindungsgemäß" oder "erfindungswesentlich" ist subjektiv und impliziert nicht, dass die so benannten Merkmale zwangsläufig Bestandteil eines oder mehrerer Patentansprüche sein müssen.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.
- Fig. 1:: Schnittdarstellung durch den Werkzeughalter mit einer Gesamtübersicht
- Fig. 2:: Schnittdarstellung durch den Werkzeughalter mit Darstellung des Prinzips Messerwechsel (Wippe im Eingriff)
- Fig. 3:: Schnittdarstellung durch den Werkzeughalter mit Darstellung des Prinzip Messerwechsel (Messer frei für Wechsel)
- Fig. 4:: Schnittdarstellung durch den Werkzeughalter mit Darstellung des Prinzips der Justierung von Fas- und Entgratgrösse (Lösen und Festsetzen von Justierstück)
- Fig.5:: Seitenansicht des Werkzeughalters mit Darstellung des Prinzips der Justierung von Fas- und Entgratgrösse (Beispielposition 1)
- Fig.6:: Seitenansicht des Werkzeughalters mit Darstellung des Prinzips der Justierung von Fas- und Entgratgrösse (Beispielposition 2)
- Fig.7:: Schnittdarstellung durch den Werkzeughalter mit Darstellung des Prinzips der Federvorspannung der Wippe
- Fig. 8:: Perspektivische Darstellung eines Schneidmessers
- Fig. 9:: Schnittdarstellung durch den Werkzeughalter mit Darstellung des Prinzips des Messerwechsels (Einführen der Messer)
- Fig. 10:: Explosionsartige Darstellung der wesentlichen Teile des Entgratwerkzeuges
- Figur 11:: Lösbare Verbindung zwischen dem Justierstück, dem Spannstück und dem Grundkörper
- Figur 12:: Perspektivische Darstellung des Spannstücks
- Figur 13:: Ansicht auf das Justierstück von der Verbindungsseite her
- Figur 14:: Ansicht auf das Justierstück von der Innenseite her
- Figur 15:: Perspektivische Darstellung der Montage von Spannstück und Justierstück
- Figur 16:: Ansicht in das Innere des Justierstücks mit gekoppeltem Spannstück

### Grundlegende Funktion des Werkzeughalters 1

Der in Rotationsrichtung 36 drehend angetriebene Werkzeughalter 1 dient zum Anbringen von Fasen oder Entgratungen an vorderen und oder rückseitigen Bohrungskanten. Die Werkzeugachse 37 fluchtet dabei zur Mittenachse der zu entgratenden Bohrung.

Der Werkzeughalter 1 arbeitet mit zwei diametral gegenüberliegend wirkenden Schneidmessern 2, 2a. Ein solches Schneidmesser 2, 2a und dessen Antrieb ist beispielsweise in der EP 0 291 563 B1 beschrieben. Auf die dortige Offenbarung wird Bezug genommen. Nachdem die Schneidmesser 2, 2a identisch ausgebildet sind, genügt es für die folgende Beschreibung lediglich ein Schneidmesser 2 zu beschreiben.

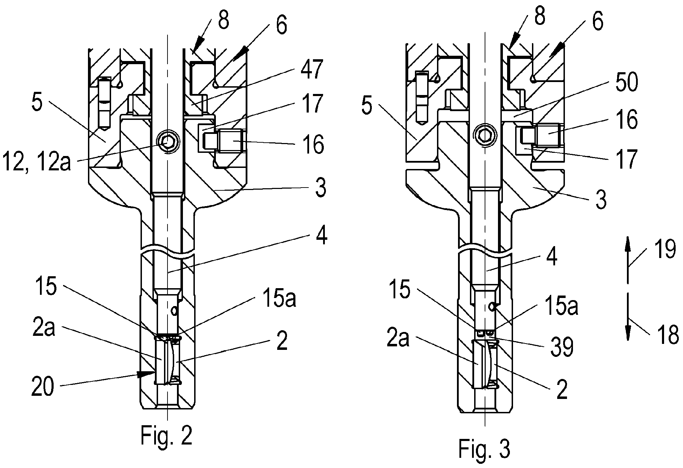

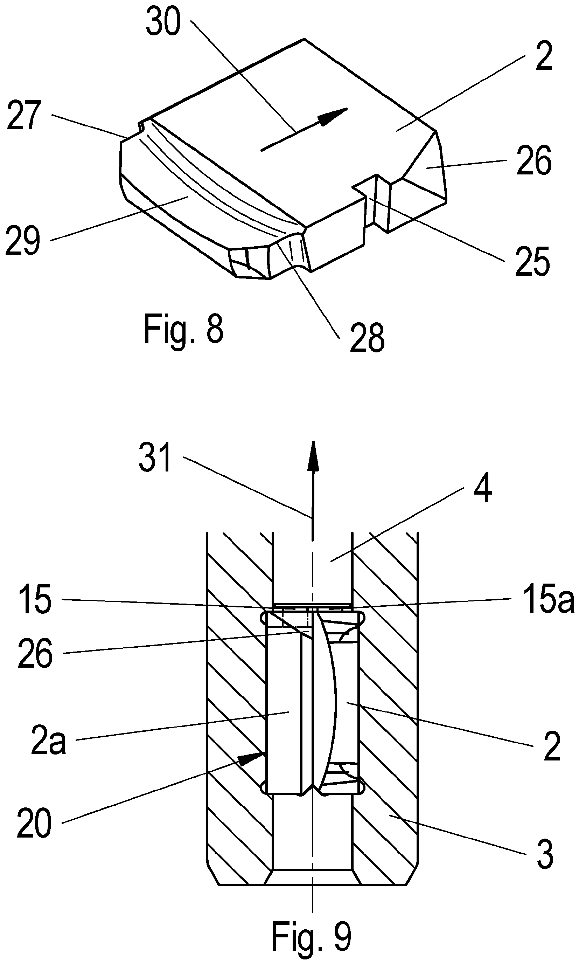

Die Schneidmesser 2, 2a werden gemäss Figur 2 und 3 durch eine in der Werkzeugachse 37 drehend federvorbelastete zylindrische Wippe 4 mittels in axialer Richtung gerichteten Wippenbolzen 15, 15a, welche in Bolzennuten 25 in den Oberseiten der Schneidmesser 2, 2a eingreifen, in ihrer ausgefahrenen Position gehalten. Diese Position definiert auch die radiale Lage der Schneidkanten 27, 28 der Schneidmesser 2, 2a gemäss Figur 8 und somit die Grösse der Entgratung beziehungsweise der Fase.

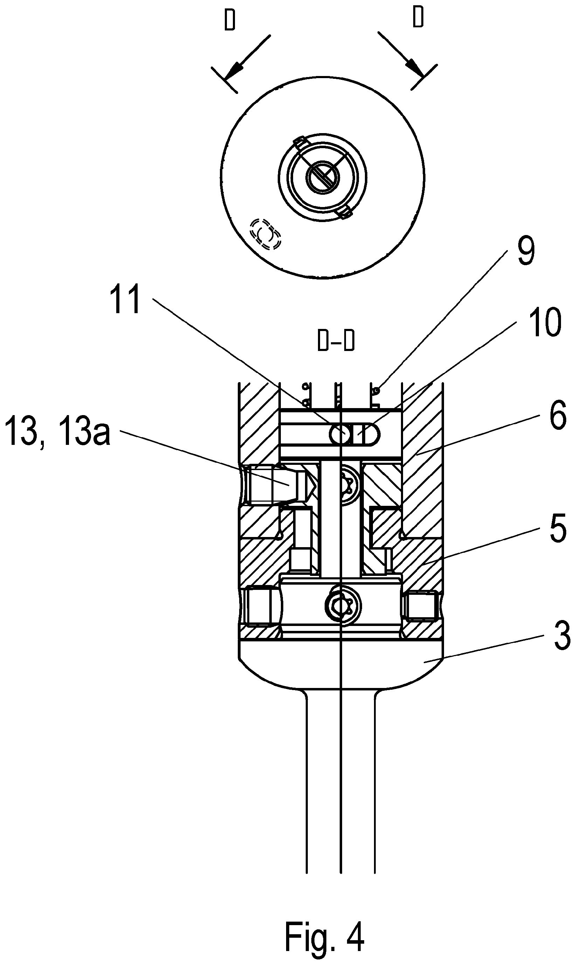

Die Wippe 4 wird gemäss Figur 4 durch ihren in radialer Richtung weisenden Anschlagbolzen 10, der an einem Anschlagbolzen 11 des Grundkörpers 6 anliegt, relativ zum Grundkörper 6 federvorbelastet in einer Grundposition gehalten.

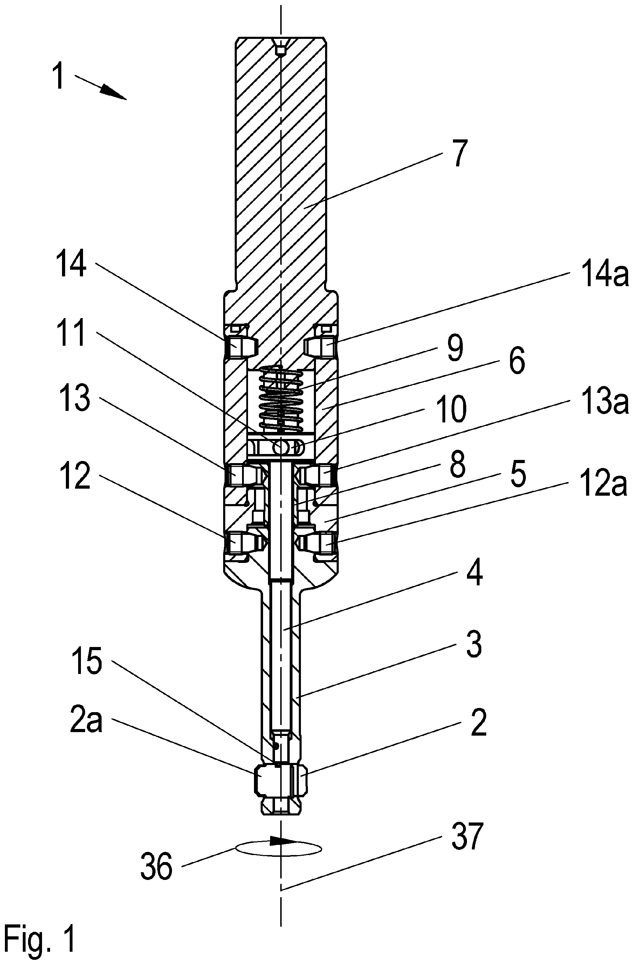

In die entgegengesetzte Richtung kann die Wippe 4 frei gegen die Federvorspannung einer Torsionsfeder 9 drehen. Die Torsionsfeder stützt sich gemäss Figur 1 mit ihrem oberen Ende an einem axialen Ansatz des Schafts 7 ab, während das untere Ende mit einem axialen Ansatz der Wippe 4 verbunden ist.

Während des Zerspanungsprozesses, wenn die Fas- beziehungsweise Entgratgrösse erreicht ist, können die Schneidmesser 2 infolge der Prozesskräfte einfahren und durch die zu entgratende Bohrung gleiten, um auf der gegenüberliegenden Seite aus der Bohrung auszutreten und federbelastet in ihre ausgefahrene Stellung zu kommen.

Dabei wird die Wippe 4 gegen die Federkraft der Torsionsfeder 9 verdreht und weiter vorgespannt. Diese Vorspannung treibt dann die Schneidmesser 2 wieder radial nach aussen für den nächsten Prozessschritt einer weiteren Entgratung. Mit einer axialen Rückwärtsbewegung des drehend angetriebenen Werkzeughalters 1 kann somit auch der rückwärtige Bohrungsrand entgratet oder angefast werden.

Damit beschreibt die Erfindung ein neuartiges Konzept eines Entgratwerkzeugs, das in Alleinstellung oder jeder beliebigen Kombination folgende Merkmale aufweist:
1. Für die Bearbeitung von Werkstücken mit diesem Werkzeug ist es notwendig, dass von Zeit zu Zeit die Schneidmesser 2 ausgewechselt werden können,
2. dass die Fas- beziehungsweise die Entgratgrösse justiert werden kann und
3. dass die Vorspannkraft der Wippe 4 verändert werden können.

Diese Merkmale werden im Folgenden dargestellt:

### 1. Messerwechsel der Schneidmesser 2 (Figuren 2, 3, 8 und 9)

Die zylinderstiftförmige Wippe 4 ist drehbar in einem Messergehäuse 3 gelagert, an dessen unteren Ende eine fensterartige Messerausnehmung 20 für die Lagerung der dort angeordneten Schneidmesser 2, 2a angeordnet ist.

Im Messergehäuse 3 sind gemäss den Figuren 1 - 3 diametral gegenüberliegende Gewindebohrungen angeordnet, in denen jeweils eine Feststellschraube 12, 12a eingeschraubt ist. Jede Feststellschraube 12, 12a stützt sich in der Spannstellung mit ihrem bolzenseitigen Ende am Außenumfang der Wippe 4 ab.

Durch Lösen der Feststellschrauben 12, 12a für die Festlegung des Messergehäuses 3 kann das Messergehäuse 3 relativ zur Wippe 4 in axialer Pfeilrichtung 18 nach vorne gezogen werden. Dies ist im Vergleich zwischen den Figuren 2 und 3 ersichtlich. Die Wippe 4 bildet somit den Lagerkörper für die Verschiebung des auf der Wippe 4 verschiebbar gelagerten Messergehäuses 3. Somit bewegen sich auch die Schneidmesser 2, 2a, welche in der Messerausnehmung 20 im Grundkörper 6 gelagert sind, mit der axialen Verschiebung des Messergehäuses 3 nach vorne. Dabei verlieren die beiden Wippenbolzen 15, 15a ihren Eingriff in die Bolzennuten 25 der Schneidmesser 2, 2a und die Messer kommen frei und können der Messerausnehmung 20 entnommen werden.

Dieser Vorgang ist im Vergleich zwischen Figur 2 und Figur 3 erkennbar. Das Messergehäuse 3 ist mit einem inneren, mittigen axialen Ansatz verschiebbar und in Drehrichtung festlegbar in einer zentralen Lageraufnahme 50 in einem Justierstück 5 gehalten. Durch die axiale Vorschubbewegung des Messergehäuses 3 in der zentralen Lageraufnahme 50 in Pfeilrichtung 18 auf der im Werkzeughalter 1 festgehaltenen Wippe 4 entsteht gemäss Figur 3 ein Freiraum 39 zwischen der inneren Stirnseite des Messergehäuses 3 und der gegenüberliegenden Stirnseite des Grundkörpers 6 und aufgrund dieses axialen Abstandes kommen die Wippenbolzen 15, 15a außer Eingriff mit den messerseitigen Bolzennuten 25. Die Schneidmesser 2, 2a können dann aus der Messerausnehmung 20 herausgenommen und gegen neue Schneidmesser ausgetauscht werden.

Damit das Messergehäuse 2 bei dieser Aktion nicht ganz aus der Lageraufnahme 50 herausgezogen werden kann und die Orientierung für das erneute Festsetzen mittels der Feststellschrauben 12, 12a nicht verliert, ist eine Begrenzungsschraube 16 in dem Justierstück 5 vorgesehen, welche in eine Begrenzungsnut 17 im Messergehäuse 3 eingreift und die Bewegung des Messergehäuses 2 sowohl radial als auch axial einschränkt.

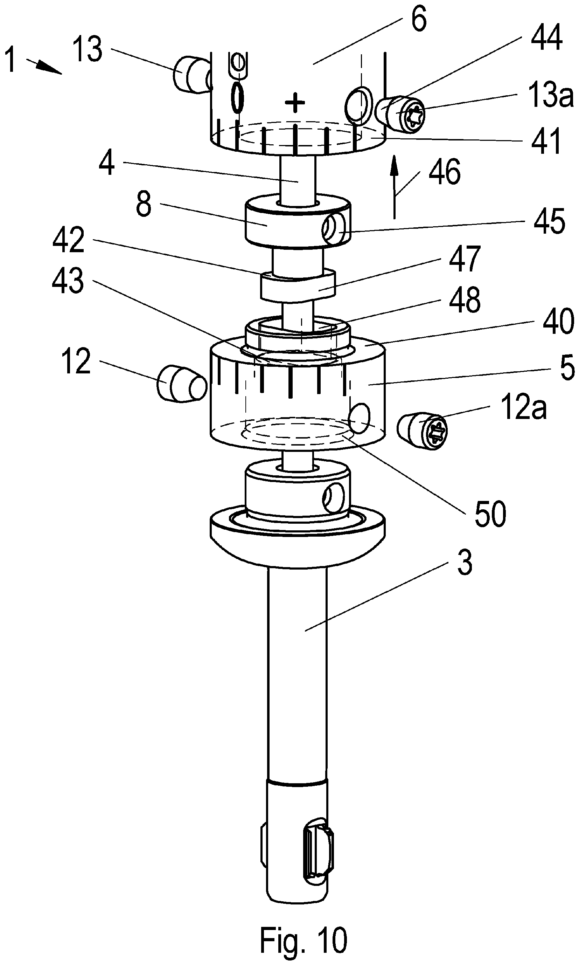

Das Justierstück 5 ist gemäss den Figuren 10-16 eine zylindrische Hülse, welche die untere, in axialer Richtung einseitig geöffnete Lageraufnahme 50 aufweist, in welche ein mittiger axialer Ansatz verringerten Durchmessers des Messergehäuses 3 eingreift und dort verschiebbar und festlegbar aufgenommen ist. Das Justierstück 5 ist gemäss Figur 2 und 3 über Lagerbolzen mit der unteren Stirnseite eines Spannstücks 8 verbunden.

Vor dem Einsetzen neuer Schneidmesser 2, 2a wird das Messergehäuse 3 zuerst in Pfeilrichtung 19 zurückgestossen und mittels der Feststellschrauben 12, 12a wieder mit dem Justierstück 5 formschlüssig festgesetzt. Danach können die neuen Schneidmesser 2, 2a unabhängig voneinander, eines nach dem anderen in Peilrichtung 30 in die Messerausnehmung 20 im Messergehäuse 6 eingeführt werden. Dabei drücken die dafür vorgesehenen Einführschrägen 26 der Schneidmesser 2, 2a die Wippe 4 in axialer Pfeilrichtung 31 (siehe Fig. 9) nach hinten und die Wippenbolzen 15, 15a der nun auch axial federvorbelasteten Wippe 4 rasten wieder in die Bolzennuten 25 (siehe Fig. 8) ein und fixieren die Schneidmesser 2, 2a auch in radialer Richtung.

### 2. Verstellmechanismus Fasdurchmesser (Figuren 4, 5 und 6)

In der Grundstellung des Werkzeughalters 1, bevor die geplante Fase beziehungsweise Entgratung angebracht wird, steht die Wippe 4 in einer federvorbelastet fixen Position zum Grundkörper 6. Die Komponenten Anschlagbolzen 10 der Wippe 4 und Anschlagbolzen 11 im Grundkörper 6 halten die drehend federvorbelastete Wippe 4 in einer Richtung in dieser fixen Position dadurch, dass die Torsionskraft der Torsionsfeder 9 den wippenseitigen Anschlagbolzen 10 gegen den grundkörperseitigen Anschlagbolzen 11 drückt.

Um nun die Fas- beziehungsweise die Entgratgrösse einzustellen oder zu justieren, ist es notwendig das Messergehäuse 3 in Umfangsrichtung drehend relativ zur Wippe 4 und somit zum Grundkörper 6 zu verschieben. Die notwendigen Komponenten, um diesen Justierprozess stufenlos und hinreichend genau auszuführen, sind das Justierstück 5, das Spannstück 8 und die Feststellschrauben 13, 13a. Sie verbinden das Messergehäuse 3 mit dem Grundkörper 6 sowohl lösbar als auch in festgesetztem Zustand mit ausreichend Genauigkeit um den Rundlauf des Messergehäuses 3 zu gewährleisten und bieten ausreichend Kraftschluss um die Zerspanungskräfte hin zum Schaft 7 zu übertragen.

Bei der Werkzeugmontage wird eine Verbindung zwischen dem Justierstück 5 und dem Spannstück 8 hergestellt, die während der gesamten Nutzungsdauer des Werkzeugs aufrecht erhalten bleibt. Dies erfolgt vorteilhaft mit den nachfolgend beschriebenen Massnahmen.

Die Ausnehmung 48 an der Oberseite des Justierstücks 5 ist so ausgebildet, dass bei der Werkzeugmontage der Nocken 47 am Spannstück 8 in einer bestimmten Drehlage durch die Ausnehmung 48 in das Justierstück 5 eingeführt werden kann und durch nachträgliches Verdrehen innenliegend im Justierstück 5 eingreift. Die Ausnehmung 48 entspricht in etwa der Form des Nockens 47 und dient lediglich zur Einführung des Nockens 47 in das Justierstück 5 hinein. Die Ausnehmung 48 hat im Betrieb keine Funktion mehr.

Die längliche Form des Nockens 47 und entsprechend die der Ausnehmung 48 im Justierstück 5 haben bei der Montage das Ziel, dass der Nocken 47 mit ca. 90° Verdrehung innenliegend im Justierstück 5 eine Gegenfläche, nämlich die Anlagefläche 43, vorfindet und das Justierstück 5 an den Grundkörper 6 heranziehen kann. Es handelt sich demnach um eine Dreh-Steckverbindung zwischen dem mit dem Nocken 47 verbundenen Spannstück 8 und dem damit - zwecks Montage - lösbar verbundenen Justierstück 5, das dadurch mit dem Grundkörper 6 verbunden ist.

In einer anderen bevorzugten Ausführung kann eine solche lösbare Verbindung auch in der Form einer kinematischen Umkehrung der oben beschriebenen Dreh-Steckverbindung ausgebildet sein. Dabei ist der Nocken 47 an das Justierstück 5 in axialer Verlängerung angeformt und greift in eine formangepasste Ausnehmung 48 im Spannstück 8 in der Art der vorbeschriebenen Dreh-Steckkupplung ein.

Neben dieser kinematischen Umkehrung einer lösbaren Steck-Dreh-Kupplungsverbindung gibt es noch andere bevorzugte Ausführungen zur Verbindung der drei genannten Teile 5, 6, 8. Es kann z.B. eine Magnetkupplung zur lösbaren Kupplung dieser Teile vorgesehen sein. Ebenso können an der Stirnseite des einen Teils mehrere am Umfang verteilte Nocken angeordnet sein, die in gleichgeartete, am Umfang verteilt angeordnete Ausnehmungen am gegenüberliegenden Teil eingreifen.

Weder das Justierstück 5 noch das Spannstück 8 mit seinem Nocken 47 haben eine feste Verbindung mit der Wippe 4. Die Wippe 4 greift frei durch diese Komponenten 5, 8 hindurch und lässt sich relativ zu diesen Komponenten 5, 8 sowohl axial als auch radial frei bewegen.

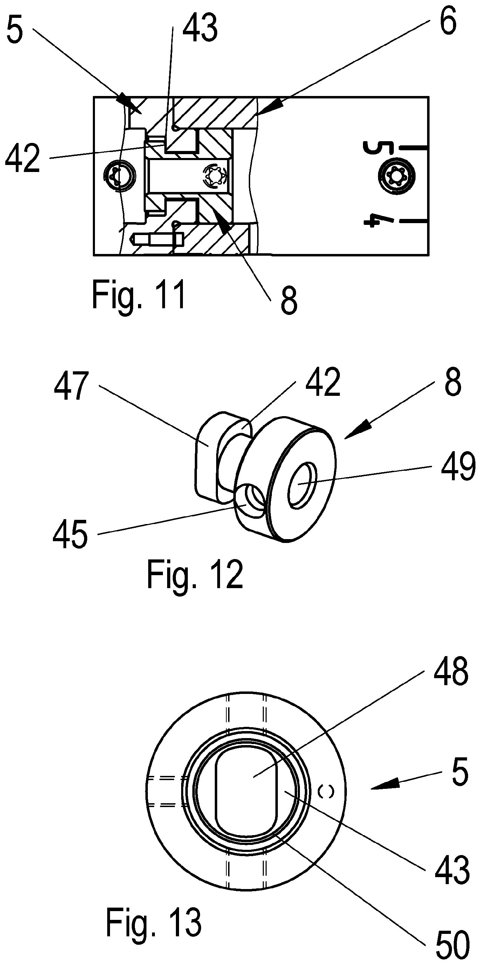

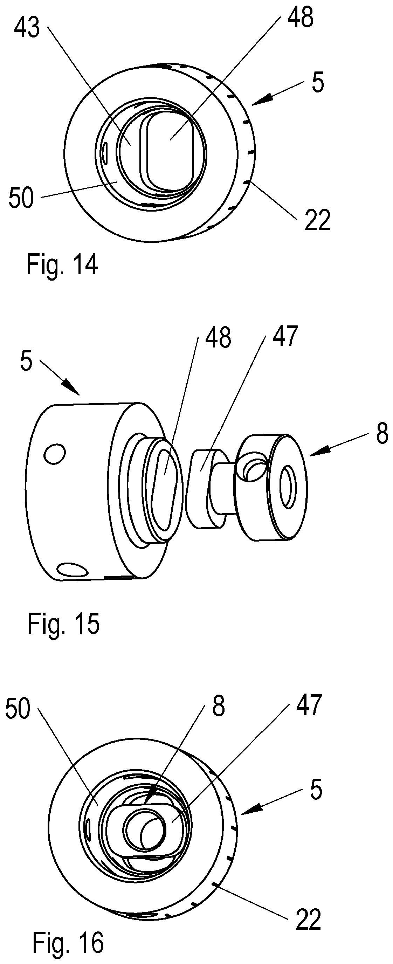

Demnach ist gemäss der Figur 11 das Justierstück 5 über das Spannstück 8 mit dem Grundkörper 6 lösbar verbunden. Am Spannstück 8 ist gemäss Figur 12 in axialer Verlängerung der oval oder rechteckförmig ausgebildete Nocken 47 angeformt. Die Figur 13 zeigt die Ansicht auf das Justierstück 5 von der Verbindungsseite zum Grundkörper 5 gesehen. Die Figur 14 zeigt die Ansicht in das Innere des Justierstücks 5 mit der Anlagefläche 43.

Dir Figur 15 zeigt die Ansicht auf das Justierstück 5 und das Spannstück 8 in der Orientierung, wie der Nocken 47 des Spannstücks 8 bei der Montage des Werkzeugs in das Justierstück 5 eingeführt werden kann. Ferner zeigt die Figur 16 die Ansicht in das Innere des Justierstücks 5 mit dem nun querliegenden Nocken 47 des Spannstücks 8, welcher die Aufgabe hat, das Justierstück 5 lösbar und in gelöstem Zustand auch drehbar an den Grundkörper 6 heranzuziehen.

Dabei ist vorgesehen, dass das Justierstück 5 mittels dieses Nockens 47 in gelöstem Zustand für die Einstellung bzw. Justierung der Fasgrösse drehbar am Grundkörper 6 anliegt und dass in festgesetztem Zustand der Nocken 47 das Justierstück 5 axial an den Grundkörper 6 heranzieht, so dass mit den entstehenden Reibkräften an dieser Verbindung das Justierstück 5 auch radial (in Drehrichtung) mit dem Grundkörper 6 festgesetzt wird.

Das Spannstück 8 ermöglicht einerseits das stufenlose Justieren der Fasgrösse und garantiert beim Festsetzen des Justierstücks 5, dass sich die getroffene Einstellung nicht verändert. Dazu greift die zylinderstiftartige Wippe 4 gemäss Figur 10 durch die Mittenbohrung 49 des Spannstücks 8 hindurch.

Das zylinderförmige Justierstück 5 nimmt mit seiner zentralen Ausnehmung 48 das Spannstück 8 auf.

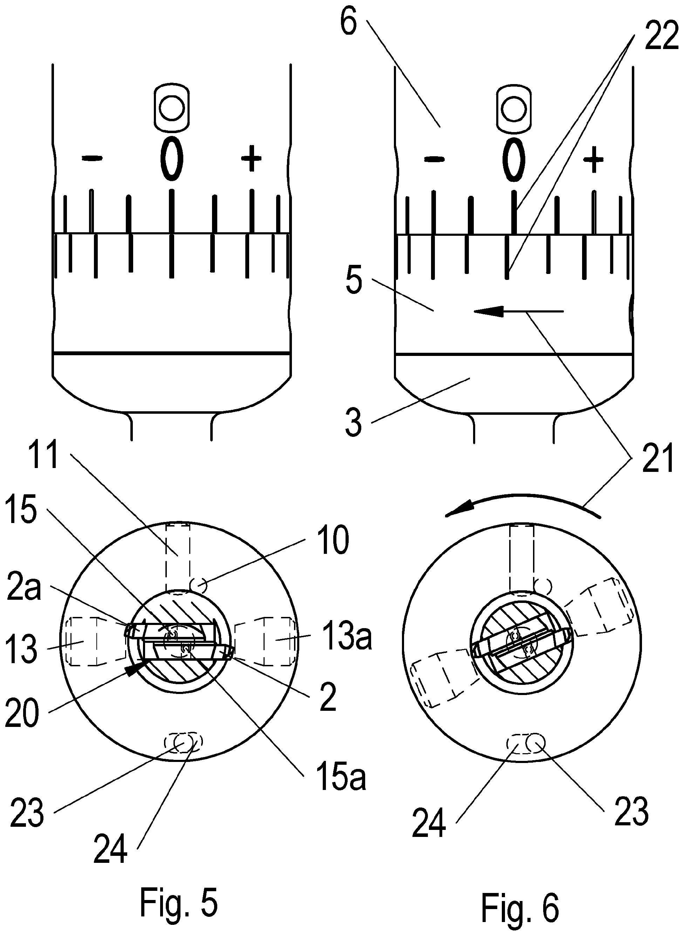

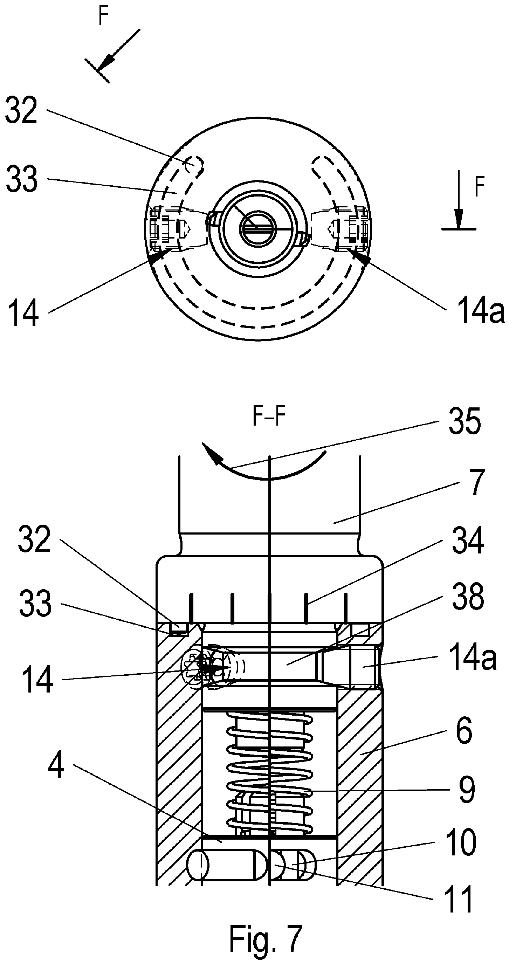

Durch Lösen der Feststellschrauben 13,13a wird der Kraftschluss zwischen Grundkörper 6 und Justierstück 5 aufgehoben und die Schneidmesser 2, 2a können gemäss Figur 7 durch Verdrehen des Messergehäuses 3 beispielsweise in Richtung 21 relativ zur Wippe 4 über das durch die Wippenbolzen 15, 15a und messerseitigen Bolzennuten 25 gebildete exzentrische Getriebe radial verschoben und justiert werden. Die im oberen Teil der Figuren 5 und 6 dargestellten Markierungen 22 auf dem Grundkörper 6 und dem Justierstück 5 helfen die Justierung der Drehlage des Messergehäuses 3 in skalierter Weise und reproduzierbar vorzunehmen. Der maximale Verstellbereich wird dabei durch den Eingriff des Begrenzungsstifts 23 im Justierstück 5 in die Begrenzungsnut 24 im Grundkörper 6 eingeschränkt, so dass die Schneidmesser 2, 2a nicht über den geometrisch festgelegten Bereich in radialer Richtung bewegt werden können.

Beim Anziehen der grundkörperseitigen Feststellschrauben 13, 13a, welche mit ihren Bolzenenden in radial nach außen gerichtete Kegelflächen 45 im Spannstück 8 eingreifen, wird mittels des Spannstücks 8 der Kraftschluss zwischen Justierstück 5 und Grundkörper 6 wiederhergestellt und die beiden Komponenten 5, 6 werden zueinander festgesetzt ohne dass die eingestellte Justierung verschoben wird.

### 3. Einstellung der Federvorspannung der Torsionsfeder 9 (Figur 7)

Das neuartige Werkzeugkonzept sieht die Verwendung eines Schafts 7 für die Adaption des Werkzeughalters 1 in der Werkzeugmaschine vor. Der Schaft 7 wird dabei mit einem in den Zeichnungen nicht dargestellten motorisch drehangetriebenen Spannfutter in der Werkzeugmaschine verbunden.

Die für die Bearbeitung verschiedener Werkstoffe notwendige Einstellung der radial wirkenden Federvorspannung der Wippe 4, nämlich das Vorspannmoment auf die Schneidmesser 2, 2a, ist vorteilhaft in die Verbindung von Grundkörper 6 und Schaft 7 integriert. Die Zerspanungskraft wird über die drehlast-übertragende Verbindung zwischen Grundkörper 6 und Schaft 7 mittels den Feststellschrauben 14, 14a im Grundkörper 6 übertragen. Dabei greifen die Feststellschrauben 14, 14a im Grundkörper 6 in eine Ringnut 38 im Schaft 7 ein. Gemäss Figur 7 ist die Torsionsfeder 9 ist mit ihrem oberen Ende mit einem axialen Ansatz an der Unterseite des Schafts 7 verbunden, während das andere Ende mit einem axialen Ansatz der Wippe 4 verbunden ist.

Beim Lösen der beiden Feststellschrauben 14, 14a kann der Schaft 7 beispielweise in Pfeilrichtung 35 relativ zum Grundkörper 6 verdreht werden und in diesem Fall die Torsionsfeder 9 spannen und in Gegenrichtung entspannen. Durch nachträgliches Anziehen der Feststellschrauben 14, 14a wird die kräfteübertragende Verbindung von Schaft 7 und Grundkörper 6 wiederhergestellt. Die diametral gegenüberliegenden Feststellschrauben 14, 14a ermöglichen auch die notwendige Genauigkeit der Verbindung um den Rundlauf des Werkzeughalters 1 als Ganzes sicherzustellen. Die Markierungen 34 auf dem Grundkörper 6 und dem Schaft 7 ermöglichen ein skalierbares und reproduzierbares Einstellen der Vorspannkraft der Torsionsfeder 9. Der maximale gewollte Verstellbereich wird dabei durch die Elemente Begrenzungsstift 32 im Schaft 7 und Begrenzungsnut 33 im Grundkörper 6 in Umfangsrichtung eingeschränkt.

Aus der explosionsartigen Darstellung der Figur 10 ergeben sich weitere Einzelheiten des erfindungsgemässen Entgratwerkzeugs.

In festgesetztem Zustand sind die Teile Messergehäuse 3, Justierstück 5 und Grundkörper 6 über die Feststellschrauben 12, 12a im Messergehäuse 3 fest miteinander verbunden. Die Verbindung des Justierstücks 5 mit dem Grundkörper 6 wird mittels des Spannstücks 8 in axialer Pfeilrichtung 46 einstellbar und arretierbar hergestellt. Dabei ist das Spannstück 8 mittels der Feststellschrauben 13, 13a lösbar mit dem Grundkörper 6 verbunden. Dabei greifen die bolzenseitigen Kegelflächen 44 der Feststellschrauben 13, 13a in die etwa gleichartigen bohrungsseitigen Kegelflächen 45 im Spannstück 8 ein.

Das Spannstück 8 greift mit seinem an der Unterseite angeordneten Nocken 47 in das Innere des Justierstücks 5 in eine dort angeordnete, formangepasste Ausnehmung 48 so ein, dass die spannstückseitige Nockenanlagefläche 42 an der innenliegenden Anlagefläche 43 des Justierstücks 5 anliegt.

Durch Festsetzen der beiden grundkörperseitigen Feststellschrauben 13, 13a in den radial nach außen gerichteten, als Bohrungen ausgebildete Kegelflächen 45 im Spannstück 8 wird das Spannstück 8 axial in Pfeilrichtung 46 in den Grundkörper 6 hineinbewegt und zieht das Justierstück 5 in axialer Richtung an den Grundkörper 6 an. Dabei legt sich die obere, stirnseitige Anlagefläche 40 des Justierstücks 5 an der gegenüberliegenden Anlagefläche 41 des Grundkörpers 6 an und baut den notwendigen radial wirkenden Kraftschluss auf. Somit wird das Justierstück 5 axial durch Formschluss und radial durch Kraftschluss mit dem Grundkörper 6 festgesetzt. Die Wippe 4 bleibt dabei zu den Teilen Messergehäuse 3, Justierstück 5 und Spannstück 8 drehend und axial verschiebbar gelagert. Durch geringfügiges Lösen der Feststellschrauben 13, 13a wird der radial wirkende Kraftschluss zwischen Grundkörper 6 und Justierstück 5 aufgehoben und das Justierstück 5 kann mitsamt dem daran festgesetzten Messergehäuse 3 drehend relativ zum Grundkörper 6 eingestellt werden. Damit lässt sich die Fas- beziehungsweise Entgratgrösse einstellen oder justieren. Diese Verbindung von Justierstück 5 und Grundkörper 6 wird demnach mittels des Spannstücks 8 hergestellt, sodass beim Festsetzen dieser zwei Teile keine bei Rotation störend wirkenden Kräfte auftreten, welche die genaue Justierung beim Festsetzen wieder beeinträchtigen. Das Spannstück 8 dient dabei lediglich als Verbindungsstück, um eine ausschliesslich axial gerichtete Bewegung zu garantieren.

Die axiale Bewegung in Pfeilrichtung 46 für das Festsetzen der Teile Justierstück 5 mittels Spannstück 8 und Grundkörper 6 wird durch das Eingreifen der aussenliegenden Kegelflächen 44 der Feststellschrauben 13, 13a in die innenliegenden Kegelflächen 45 des Spannstücks 8 ausgelöst.

### Bezugszeichenliste

- 1: Werkzeughalter
- 2: Schneidmesser
- 2a: Schneidmesser
- 3: Messergehäuse
- 4: Wippe
- 5: Justierstück
- 6: Grundkörper
- 7: Schaft
- 8: Spannstück
- 9: Torsionsfeder
- 10: Anschlagbolzen (Wippe)
- 11: Anschlagbolzen (Grundkörper)
- 12: Feststellschraube (Messergehäuse)
- 12a: Feststellschraube (Messergehäuse)
- 13: Feststellschraube (Justierstück)
- 13a: Feststellschraube (Justierstück)
- 14: Feststellschraube (Schaft)
- 14a: Feststellschraube (Schaft)
- 15: Wippenbolzen
- 15a: Wippenbolzen
- 16: Begrenzungsschraube
- 17: Begrenzungsnut (Messergehäuse)
- 18: Peilrichtung
- 19: Pfeilrichtung
- 20: Messerausnehmung
- 21: Pfeilrichtung (Justierstück)
- 22: Markierung (Fasgrösse)
- 23: Begrenzungsstift (Justierstück)
- 24: Begrenzungsnut (Grundkörper)
- 25: Bolzennut (Messer)
- 26: Einführungsschräge
- 27: Schneidekante (vorwärts)
- 28: Schneidekante (rückwärts)
- 29: Spanmulde
- 30: Pfeilrichtung (Messer)
- 31: Pfeilrichtung (Wippe)
- 32: Begrenzungsstift (Schaft)
- 33: Begrenzungsnut (Grundkörper)
- 34: Markierung (Federvorspannung)
- 35: Pfeilrichtung (Schaft)
- 36: Rotationsrichtung
- 37: Werkzeugachse
- 38: Ringnut (Schaft)
- 39: Freiraum
- 40: Anlagefläche hinten (Justierstück)
- 41: Anlagefläche (Grundkörper)
- 42: Nockenanlagefläche (Spannstück)
- 43: Anlagefläche innenliegend (Justierstück)
- 44: Kegelflächen aussenliegend (von 13, 13a)
- 45: Kegelflächen innenliegend (Spannstück)
- 46: Pfeilrichtung
- 47: Nocken (Spannstück)
- 48: Ausnehmung
- 49: Mittenbohrung (in 8)
- 50: Lageraufnahme (in 5 für 3)

## Patentansprüche

1. Entgratwerkzeug zum Entgraten von Bohrungen mit paarweiser Anordnung von Schneidmessern (2, 2a) und einem drehend angetriebenen Werkzeughalter (1), wobei in einer Messerausnehmung (20) eines Messergehäuses (3) die Schneidmesser (2, 2a) gegenüberliegend mit radial nach außen weisenden, konischen Schneidkanten(27, 28) durch eine in einem Grundkörper (6) des Werkzeughalters (1) angeordnete drehbare Wippe (4) radial gegeneinander verschiebbar angetrieben sind, und die Wippe (4) um eine axiale Längsachse drehbar im Werkzeughalter (1) gelagert und in axialer Richtung federnd vorgespannt ist, **dadurch gekennzeichnet, dass** zum Messerwechsel der Schneidmesser (2, 2a) das Messergehäuse (3) axial verschiebbar und festlegbar auf der Wippe (4) und dem Grundkörper (6) gelagert ist.

2. Entgratwerkzeug nach Anspruch 1, **dadurch gekennzeichnet, dass** die Wippe (4) mit in axialer Richtung gerichteten Wippenbolzen (15, 15a) in messerseitige Bolzennuten (25) in den Oberseiten der Schneidmesser (2, 2a) eingreift, und dass zum Messerwechsel die Wippenbolzen (15, 15a) durch die axiale Verschiebung des Messergehäuses (3) auf der Wippe (4) außer Eingriff mit den messerseitigen Bolzennuten (25) bringbar sind.

3. Entgratwerkzeug nach Anspruch 1 oder 2, **dadurch gekennzeichnet, dass** zur Festlegung der relativen Verschiebungslage zwischen Messergehäuse (3) und der Wippe (4) in einem Justierstück (5) ein oder mehrere Feststellschauben (12, 12a) angeordnet sind, die mit ihrem bolzenseitigen Enden am Messergehäuse (3) anlegbar sind

4. Entgratwerkzeug nach Anspruch 3, **dadurch gekennzeichnet, dass** zur Begrenzung der axialen Verschiebung des Messergehäuses (3) eine in radialer Richtung im Justierstück (5) angeordnete Begrenzungsschraube (16) vorgesehen ist, die mit ihrem bolzenseitigen Ende in eine in axialer Richtung gerichtete Begrenzungsnut (17) im Messergehäuse (3) eingreift.

5. Entgratwerkzeug nach einem der Ansprüche 1 bis 4, **dadurch gekennzeichnet, dass** zur auswechselbaren Verbindung der Schneidmesser (2, 2a) mit der Wippe (4) am unteren Ende der Wippe (4) die axialen Wippenbolzen (15, 15a) angeordnet sind, welche mit in die Bolzennuten (25) führende Einführschrägen (26) an den Schneidmessern (2, 2a) federbelastet zusammenwirken.

6. Entgratwerkzeug nach Anspruch 5, **dadurch gekennzeichnet, dass** jedes Schneidmesser (2, 2a) in die Messerausnehmung (20) im Messergehäuse (6) einzeln einführbar ist und dass dabei die Einführschrägen (26) der Schneidmesser (2, 2a) die Wippe (4) in axialer Pfeilrichtung (31) federbelastet gegen eine Torsionsfeder (9) drücken und die Wippenbolzen (15, 15a) der federvorbelasteten Wippe (4) in die messerseitigen Bolzennuten (25) einrasten und die Schneidmesser (2, 2a) in radialer Richtung in der Messerausnehmung (20) im Messergehäuse (3) fixieren.

7. Entgratwerkzeug nach einem der Ansprüche 1 bis 6, **dadurch gekennzeichnet, dass** ein Anschlagbolzen (10) der Wippe (4) und ein Anschlagbolzen (11) im Grundkörper (6) die drehend federvorbelastete Wippe (4) in einer Drehrichtung in einer festen Anschlagposition im Messergehäuse (3) halten.

8. Entgratwerkzeug nach Anspruch 7, **dadurch gekennzeichnet, dass** die Torsionskraft der Torsionsfeder (9) den wippenseitigen Anschlagbolzen (10) gegen den grundkörperseitigen Anschlagbolzen (11) in der einseitigen Anschlagposition der Wippe (4) vorspannt.

9. Entgratwerkzeug nach einem der Ansprüche 3 bis 8, **dadurch gekennzeichnet, dass** das mit dem Grundkörper (6) verbundene zylinderförmige Justierstück (5) stirnseitig mit einem zylinderförmigen Spannstück (8) lösbar gekuppelt ist.

10. Entgratwerkzeug nach einem der Ansprüche 3 bis 9, **dadurch gekennzeichnet, dass** im Grundkörper (6) radial einwärts gerichtete Feststellschrauben (13, 13a) angeordnet sind, welche das Justierstück (5) mittels des Spannstücks (8) mit dem Grundkörper (6) sowohl lösbar als auch in festgesetztem Zustand einstellbar verbinden, um die Zerspanungskräfte zum Schaft (7) zu übertragen

11. Entgratwerkzeug nach einem der Ansprüche 3 bis 10, **dadurch gekennzeichnet, dass** eine stufenlose Justierung einer Fasgrösse des Bohrungsrandes durch Verdrehen des Justierstückes (5) relativ zum Grundkörper (3) erfolgt und dass beim Festsetzen des Justierstücks (5) mit Hilfe des innenliegenden Spannstücks (8) die getroffene Einstellung der Fasgrösse fixiert ist.

12. Entgratwerkzeug nach einem der Ansprüche 3 bis 11, **dadurch gekennzeichnet, dass** durch Lösen der grundkörperseitigen Feststellschrauben (13, 13a) der Kraftschluss zwischen dem Grundkörper (6) und dem Justierstück (5) aufgehoben ist und dass die Schneidmesser (2, 2a) durch Verdrehen des Messergehäuses (3) relativ zur Wippe (4) über das durch die Wippenbolzen (15, 15a) und messerseitige Bolzennuten (25) gebildete exzentrische Getriebe radial verschiebbar und justierbar sind.

13. Entgratwerkzeug nach einem der Ansprüche 3 bis 12, **dadurch gekennzeichnet, dass** zur Justierung der Drehlage des Messergehäuses (3) in skalierter und reproduzierbar Weise Markierungen (22) auf dem Grundkörper (6) in Gegenüberstellung zu Markierungen auf dem Justierstück (5) vorhanden sind.

14. Entgratwerkzeug nach Anspruch 13, **dadurch gekennzeichnet, dass** zur Begrenzung des maximalen Verstellbereichs der Schneidmesser (2, 2a) ein Begrenzungsstift (23) im Justierstück (5) in eine Begrenzungsnut (24) im Grundkörper (6) eingreift.

15. Entgratwerkzeug nach einem der Ansprüche 3 bis 14, **dadurch gekennzeichnet, dass** beim Anziehen der grundkörperseitigen Feststellschrauben (13, 13a) gegen das Spannstück (8) der Kraftschluss zwischen dem Justierstück (5) und dem Grundkörper (6) wiederherstellbar ist.

16. Entgratwerkzeug nach mindestens einem der Ansprüche 3 bis 15, **dadurch gekennzeichnet, dass** im festgesetzten Zustand das Messergehäuse (3), das Justierstück (5) und der Grundkörper (6) fest miteinander verbunden sind und dass die Verbindung des Justierstücks (5) mit dem Grundkörper (6) mittels des Spannstücks (8) in axialer Pfeilrichtung (46) hergestellt ist.

17. Entgratwerkzeug nach mindestens einem der Ansprüche 1 bis 16, **dadurch gekennzeichnet, dass** das Spannstück (8) mittels der Feststellschrauben (13, 13a) lösbar mit dem Grundkörper (6) verbunden ist.

18. Entgratwerkzeug nach Anspruch 17, **dadurch gekennzeichnet, dass** das Spannstück (8) mit dem Justierstück (5) lösbar gekuppelt ist.

19. Entgratwerkzeug nach Anspruch 17 oder 18, **dadurch gekennzeichnet, dass** die lösbare Kupplung zwischen Spannstück (8) und Justierstück (5) als Steck-Drehkupplung ausgebildet ist.

20. Entgratwerkzeug nach einem der Ansprüche 1 bis 19, **dadurch gekennzeichnet, dass** die Fas- beziehungsweise Entgratgrösse dadurch einstellbar oder justierbar ist, dass beim Festsetzen der beiden im Grundkörper (6) angeordneten, kegeligen Feststellschrauben (13, 13a) in zugeordnete, im Spannstück (8) angeordnete, radial gerichtete Kegelflächen (45) das Spannstück (8) in axialer Pfeilrichtung (46) in den Grundkörper (6) hineinbewegbar ist und dabei das Justierstück (5) in axialer Richtung an den Grundkörper (6) anzieht.

21. Entgratwerkzeug nach mindestens einem der Ansprüche 3 bis 20, **dadurch gekennzeichnet, dass** das Justierstück (5) axial durch Formschluss und radial durch Kraftschluss mit dem Grundkörper (6) verbunden ist und dass dabei die Wippe (4) zum Messergehäuse (3), dem Justierstück (5) und dem Spannstück (8) drehend und axial verschiebbar gelagert bleibt.

22. Entgratwerkzeug nach mindestens einem der Ansprüche 1 bis 21, **dadurch gekennzeichnet, dass** die formschlüssige Verbindung von Justierstück (5) und Grundkörper (6) mittels des Spannstücks (8) hergestellt ist, sodass beim Festsetzen dieser beiden Teile (5, 6) keine in Rotationsrichtung störend wirkenden Kräfte auftreten, welche die genaue Justierung beim Festsetzen beeinträchtigen
